# EUROPEAN PATENT APPLICATION

(11) **EP 4 617 136 A1**
(43) Date of publication of application: **17.09.2025**
(21) Application number: 24162598.7
(22) Date of filing: 11.03.2024
(51) Int. Cl.: B60W 40/105, G01S 7/00, G07C 5/00, G07C 5/08, G01S 13/00, G01S 17/00

(54) **SYSTEM, METHOD, AND COMPUTER PROGRAM FOR MONITORING A VEHICLE, AND USE OF THE SYSTEM FOR TESTING AN ELECTRONIC SENSOR SYSTEM OF A VEHICLE**

(71) Applicant: Technische Hochschule Ingolstadt, 85049 Ingolstadt (DE); Hochschule für angewandte Wissenschaften München, 80335 München (DE)
(72) Inventor: Langer, Robin, 85101 Lenting (DE); Bauder, Maximilian, 85055 Ingolstadt (DE); Schweiger, Hans-Georg, 85049 Ingolstadt (DE); Böhm, Klaus, 85049 Ingolstadt (DE)
(74) Representative: Lucke, Andreas

(57) **Abstract**

A system is provided for monitoring a vehicle, the vehicle comprising an electronic message transmission system. The system comprises a receiver adapted to receive an electronic message transmitted wirelessly from the electronic message transmission system, a controller adapted to control a movement of a motorized object, and a processor operationally coupled to the receiver. The processor is adapted to identify a position and movement information in the received electronic message, to receive from the controller first machine-readable data comprising a motion information associated with the movement, to compare the position and movement information to the motion information, and to provide second machine-readable data, wherein the second machine-readable data are associated with a result of comparing the position and movement information to the motion information.

## Description

### TECHNICAL FIELD

The present disclosure relates to a system for monitoring a vehicle, and more specifically to a system for testing an electronic sensor system, or a vehicle perception system, respectively, of the vehicle.

### BACKGROUND

The environment sensor system of a vehicle such as a car, a truck, or a bus, is an essential component of an advanced driver assistance system (ADAS) or an autonomous driving system (ADS) for enabling autonomous (i.e., fully or partly autonomous) driving of the respective vehicle.

A malfunction of the environment sensor system may cause a serious safety risk during autonomous driving. For this reason, a frequent testing and diagnosis of the proper functioning of the environment sensor system is highly desirable. However, a fully satisfactory system or method for this purpose is not available to date:
When a new car is released, a full, one-time diagnosis of the environment sensor system is performed on one or a few specimens during homologation, i.e., prior to regular operation of the vehicle.

The environment sensor system of each individual vehicle is typically tested and calibrated as one of the final steps in the manufacture of the vehicle.

Throughout its lifetime, a vehicle typically undergoes periodic vehicle inspections. However, depending on the regulations of the respective jurisdiction, the vehicle inspection may include a test of the environment sensor system or not. For example, a respective test is not performed in Germany, at least in part because a satisfactory system or method for this purpose is not available. The periodic vehicle inspection takes place every year or even only every two or three years, depending on the jurisdiction.

Moreover, a vehicle may undergo a test of its environment sensor system at a car workshop. However, in most car workshops, a respective test is not routinely performed on vehicles visiting the workshop, again at least in part because a satisfactory system or method for this purpose is not available, and in particular because such system is not available at affordable costs.

Moreover, a vehicle equipped with an ADAS/ADS may perform self-diagnosis to test the environment sensor system. The self-diagnosis is typically successful in detecting certain types of problems, such as a full failure of one of the sensors. Other problems resulting in a reduced performance of the environment sensor system are however not always detected reliably.

### OVERVIEW

In view of the technical problems laid out above, there is a need for improvements related to the monitoring of a vehicle. This objective is achieved with a system according to claim 1, its use according to claim 14, a method according to claim 10 and a computer program according to claim 15. The dependent claims refer to advantageous embodiments.

A first aspect relates to a system for monitoring a vehicle, the vehicle comprising an electronic message transmission system. The system comprises a receiver adapted to receive an electronic message transmitted wirelessly from the electronic message transmission system, a controller adapted to control a movement of a motorized object, and a processor operationally coupled to the receiver. The processor is adapted to identify a position and movement information in the received electronic message, to receive from the controller first machine-readable data comprising a motion information associated with the movement, to compare the position and movement information to the motion information, and to provide second machine-readable data, wherein the second machine-readable data are associated with a result of comparing the position and movement information to the motion information.

A respective system permits to effectively excite the environment sensor system of the vehicle, and to test the precision of the environment sensor system of the vehicle by comparing the position and movement information available at the vehicle to a known movement of a motorized object as defined by the controller.

In the context of this disclosure, the environment sensor system of the vehicle may comprise at least one environment sensor. Alternatively, the environment sensor system of the vehicle may comprise environment sensors, for example, at least two or at least three environment sensors.

According to some embodiments, the environment sensor system comprises a computer system and/or a computer program adapted to analyze output data from the environment sensor or from the environment sensors. A respective environment sensor system may also be referred to as a vehicle perception system. In respective embodiments, the environment sensor system/vehicle perception system may be adapted to perform an information fusion, such as a sensor fusion, on the output data from the environment sensor(s), and/or to perform an object detection on the output data from the environment sensor(s). The position and movement information may be associated with an output of the respective environment sensor system/vehicle perception system, for example of the information fusion or the object detection.

Advantageously, the system uses an electronic message that the electronic message transmission system of the vehicle transmits wirelessly using its electronic message transmission system. Indeed, vehicles with an ADAS or an ADS or an Adaptive Cruise Control (ACC), for example for use in car2x and/or day2 applications, are generally equipped with a respective electronic message transmission system for wireless message transmission, and they generally transmit electronic messages comprising a position and movement information, independent of the presence of the system according to the current disclosure. In other words, the system according to the current disclosure makes use of existing hardware and existing processes (i.e., of the wireless transmission of the electronic message comprising a position and movement information), avoiding any need for additional hardware or process modifications at the vehicle's end.

As compared to conventional systems without a controller for defining the movement of the motorized object, the system of the present invention has several advantages:
The environment sensor system of the vehicle is excited more efficiently, since the movement is detected more reliably and by more sensors than, for example, a position of a static object. For example, the movement of the motorized object may be designed to resemble a pedestrian or a bicycle. Vehicles equipped with an ADAS/ADS are adapted to react strongly to such objects, which are defined as "vulnerable objects" in the software of the vehicle. The system makes use of this strong reaction of the ADAS/ADS.

In particular, the environment sensor system of the vehicle is excited more efficiently using the controller for defining the movement of the motorized object than in systems which provide a two-dimensional image or video to the environment sensor system of the vehicle. With the controller for defining the movement of the motorized object, all sensors of the environment sensor system of the vehicle are excited and tested, including, for example, radar sensors and lidar sensors, and the reaction of the ADAS/ADS closely resembles the reaction during operation under realistic traffic conditions. In contrast, a two-dimensional image or video excites preferentially the cameras of the environment sensor system, and the resulting reaction of the ADAS/ADS may not fully reflect its reaction under realistic traffic conditions. An excitation not reflecting realistic traffic conditions may even result in an inappropriate recalibration of the environment sensor system, reducing its performance in a real traffic situation and thus reducing the safety of the vehicle.

As compared to systems using a static reference object, the system according to the present description uses a far richer dataset. Not only is the position information sensed by the environment sensor system of the vehicle (and transmitted in the electronic message) compared to a position of a reference object, but also the movement information sensed by the environment sensor system and available to the vehicle is compared to the motion information associated with the movement of the motorized object. In other words, the speed (velocity) information as well as the acceleration information contained in the position and movement information is made use of, rather than only using the position information. This richer dataset used in the comparison improves the accuracy and the reliability of the comparison and of the overall sensor test.

The motion information may be associated with an output of the controller controlling the movement of the motorized object.

For example, the controller may be adapted to control the movement of the motorized object by sending electronic commands, and the motion information may be associated with or may be comprised in the electronic commands.

The motion information may comprise object location information associated with the movement of the motorized object and/or object velocity information associated with the movement of the motorized object, e.g., as controlled by the controller. Optionally, the motion information may comprise object acceleration information associated with the acceleration of the motorized object, e.g., as controlled by the controller.

Alternatively, or in addition, the motion information may comprise information about a trajectory of the motorized object, e.g., as controlled by the controller.

The position and movement information may comprise both position information and movement information. The movement information may comprise velocity information and/or acceleration information and/or information about an identified trajectory.

The system according to the present disclosure is suitable for use with all types of vehicles comprising an electronic message transmission system and an environment sensor system, independent of the specific types of sensors (e.g., camera, radar, lidar, ...) employed in the respective vehicle. Using the controller for defining the movement of the motorized object, any of those sensors is excited according to its reaction in a real traffic situation.

The system according to the present disclosure is thus particularly suitable for use with a vehicle, whose environment sensor system applies a sensor fusion based on several sensors, possibly of different types. Independent of the details of the sensor fusion, the system according to the present disclosure excites a reaction of the environment sensor system as in a real traffic situation. This is an advantage over conventional systems which preferentially excite individual types of sensors, such as screens that display a two-dimensional image or video as described above.

The system according to the present disclosure uses known components and can be implemented at moderate cost.

Moreover, the system according to the present disclosure is compact and may thus be positioned in close vicinity of a road, for example on a post of a sign or on a street or traffic light, with minimum cost and effort and without interfering with the traffic.

Due to its compactness, the system may be integrated into present traffic monitoring systems, such as systems for traffic counts, for raising tolls, for speed monitoring or for monitoring vehicles at traffic lights.

Vice versa, the system according to the present disclosure may easily be adapted to take over the functionality of at least part of the respective traffic monitoring systems. For example, the system may count the number of vehicles it receives the electronic messages from and may thus provide a traffic count. Alternatively, or in addition, it may determine the speed of the vehicle from the identified position and movement information, and it may do so for any vehicle passing by, thus providing the functionality of a speed camera. Alternatively, or in addition, it may identify the vehicle from the received electronic message and may determine if a toll is to be paid for the road the system is associated with, thus providing a toll collect system.

In respective embodiments, the system may be equipped with a camera for recording a photo or a video of the vehicle, in particular, if the speed of the vehicle exceeds a predefined threshold speed and/or if the vehicle is, according to the identified position and movement information, within a field of view of said camera.

The system according to the invention may thus take the role of the respective traffic monitoring system(s). In many situations, the cost of the system is significantly lower than the cost of conventional traffic monitoring system(s). For example, a conventional speed camera may come at a cost of 65.000 to 250.000 €, the price of the system being lower by a factor of about 10.

The system can be used in normal road traffic, and any time a vehicle passes, the functionality of the environment sensor system of the respective vehicle can be checked. In contrast to periodic technical inspections, the system can also be used for aperiodic tests in the field in order to detect sensor or ADAS malfunctions more quickly and thus prevent potential accidents. At the same time, the system can of course also be used for classic periodic technical inspections.

The system may be provided in a modular form, i.e., the components of the system may be provided individually to establish the system at the site of its installation. Respective embodiments are particularly attractive if a traffic monitoring system is already available at the site of installation. The respective components of the pre-existing traffic monitoring system (e.g., its receiver or its processor) may be used or modified to implement the system, which further reduces the implementation costs.

According to some embodiments, the system is a system for testing an electronic sensor system of the vehicle and/or the algorithms based on them. This means that the entire chain of effects of vehicle perception can be tested.

The receiver, the controller, and the processor may form a monolithic unit or may be comprised in a common housing.

The receiver and/or the controller and/or the processor may be arranged in a vicinity of each other, such as at a distance of at most 50 m from each other.

The system may further comprise the motorized object.

Respective embodiments may advantageously provide a motorized object optimized to reliably excite the environment sensor system of the vehicle, such as a motorized object resembling a pedestrian or a bicycle to trigger the sensitive identification by the vehicle as a vulnerable object. The reliable excitation of the environment sensor system improves the reliability of monitoring the vehicle and hence of the system as such.

According to some embodiments, the motorized object has a height of at least 0.5 m. Alternatively, or in addition, the motorized object may have a height of at most 3 m.

According to some embodiments, the movement of the motorized object spans a distance of at least 0.5 m.

According to some embodiments, the movement of the motorized object spans a distance of at most 100 m or of at most 50 m or of at most 20 m.

According to some embodiments, the motorized object is adapted to be identified by the vehicle or by an electronic sensor system of the vehicle as a pedestrian or as a bicycle or as a two-wheeler.

According to alternative embodiments, the motorized object is adapted to be identified by the vehicle or by the electronic sensor system of the vehicle as a car, a bus, or a truck.

The motorized object may be adapted to reflect a type of object from a list comprising a car, a truck, a pedestrian, and a bicycle. The processor may be adapted to identify an object type information in the received electronic message, and to compare the object type information to the type of the object. The second machine-readable data may further be associated with a result of comparing the object type information to the type of object.

At least part of a surface of the motorized object may be formed by a metal, in particular according to embodiments wherein the motorized object is adapted to reflect a bicycle, a car, a bus, or a truck.

The respective motorized object may provide a high reflectivity for radar radiation and for a laser beam, and is thus particularly suitable to excite an environment sensor system (i.e., of the vehicle) comprising a radar and/or a lidar system.

The motorized object and/or the receiver may be arranged in a vicinity, for example at a distance of at most 10 m, of a street adapted to support the vehicle.

According to some embodiments, the system further comprises a housing adapted to enclose the motorized object when the motorized object performs the movement.

A respective housing improves the safety of the system, as it prevents any possible collision between the motorized object and a passerby, such as a bicyclist or a pedestrian. Moreover, the housing protects the motorized object from external influences such as weather conditions, vandalism or bird strikes, in particular when installed next to a road.

Alternatively, or in addition, the housing may enclose the motorized object when the motorized object performs the movement.

The housing may be transparent, for example for visible light and/or for infrared light and/or for radar radiation and/or for electromagnetic radiation in a frequency range from 20 to 200 GHz or from 20 to 100 GHz.

Respective embodiments ensure that the motorized object is detectable for the environment sensor system of the vehicle, which typically comprises a camera or a radar system relying on the detection of corresponding light or electromagnetic radiation.

The receiver and/or the controller and/or the processor and the motorized object may be arranged in a vicinity of each other, such as at a distance of at most 50 m from each other.

The system may further comprise a sender.

The sender may be adapted to request the vehicle with the electronic message transmission system to send the electronic message.

Alternatively, or in addition, the sender may be adapted to send, for example before the electronic message is received, machine-readable instructions to the vehicle with the electronic message transmission system, wherein the machine-readable instructions are adapted to instruct the vehicle to autonomously or semi-autonomously adopt a position or follow a route defined by the system, for example defined relative to (a) position(s) of the receiver and/or of the motorized object and/or of the sender and/or defined according to a first region and/or according to a second region.

Respective embodiments advantageously make use of the autonomous driving functionality of the vehicle to improve the reliability and accuracy of the monitoring of the vehicle. For example, the request from the sender may ensure that the vehicle does send the electronic message using its electronic message transmission system, thus improving the reliability of the system. In embodiments, wherein the system causes the vehicle to autonomously or semi-autonomously adopt a predefined position or route, the predefined position or route ensure that the environment sensor system of the vehicle gets effectively excited by the system, improving the accuracy of the monitoring, or of the sensor test, respectively. The position(s) or the route may be predefined such that the vehicle senses the motorized object from different perspectives, which further improves the performance of monitoring the vehicle and of the sensor test.

The sender may be adapted to receive the second machine-readable data and to send third machine-readable data, wherein the third machine-readable data are associated with the result of comparing the position and movement information to the motion information.

In respective embodiments, the sender is adapted to provide the result of the comparison, reflecting the outcome of the sensor test, in the form of third machine-readable data to the vehicle and/or to a remote server system for further processing. Respective embodiments improve the road safety and/or speed up the repair of the environment sensor system. For example, the third machine-readable data allow the monitored vehicle to take responsive action, in particular when a malfunctioning of the environment sensor system is detected and reported. For example, the vehicle may shut down autonomous driving functionality which is critically affected by the malfunction and may switch to manual driving, thus improving the safety of operation, or, in case of a fully autonomous (level 5) vehicle, the vehicle may stop at a safe position. Alternatively, or in addition, the remote server may take action to prepare a repair or an exchange of the affected sensor, for example by requesting an appointment at a workshop or by placing an order for an exchange part. In addition, the remote server may alert other vehicles with communication systems or a public institution of a possible safety threat resulting from the malfunction.

The sender may be adapted to send the third machine-readable data wirelessly for reception by the vehicle with the electronic message transmission system, such as for adjusting an electronic sensor system of the vehicle.

In respective embodiments, the vehicle may be comprised in the system, and/or the vehicle may be adapted to receive the third machine-readable data, for example using a wireless communication system of the vehicle.

In respective embodiments, the vehicle may be adapted to provide an alert, such as a visual alert, a warning message and/or an alarm sound and/or a tactile warning, in response to receiving the third machine-readable data; and/or the vehicle may be adapted to adjust at least one parameter of the vehicle in response to receiving the third machine-readable data, in particular, wherein the at least one parameter is related to the electronic sensor system of the vehicle and/or to a power train of the vehicle and/or to an engine and/or to a transmission of the vehicle and/or to a lighting system of the vehicle; and/or the vehicle may be adapted to autonomously drive to a target position or to stop in response to receiving the third machine-readable data.

Alternatively, or in addition, the sender may be adapted to send the third machine-readable data to a remote server adapted to receive the third machine-readable data, such as a remote server at a distance of at least 10 m or at least 100 m from the receiver.

In respective embodiments, the remote server may be comprised in the system. The remote server may be adapted to, in response to receiving the third machine-readable data, provide an alert, and/or to display at least part of the third machine-readable data on a screen and/or to provide a warning message and/or to sound an alarm.

The receiver may be adapted to receive the electronic message from a first region. The receiver and the motorized object may be arranged with a line of sight to the first region; and/or the receiver may be adapted to receive the electronic message from the vehicle, for example when the vehicle is located in the first region.

Alternatively, or in addition, the system may comprise the sender described above, and the sender may be adapted to send the third machine-readable data to the first region, in particular wirelessly.

The corresponding arrangement of the components of the system with respect to the first region ensures that the electronic message from the vehicle is reliably detected by the receiver and that, at the same time, the vehicle can reliably sense the motorized object and, optionally, that the vehicle can receive the third machine-readable data from the sender. The arrangement thus improves the reliability of monitoring the vehicle, or of the system, respectively.

According to some embodiments, the system further comprises a first sensor system adapted to determine a position and/or an orientation of the vehicle.

Being equipped with the first sensor system, the system is able to determine the position and/or the orientation of the vehicle independently of the electronic message sent out by the vehicle. The independently determined position and/or orientation of the vehicle can be applied during the comparison, improving the accuracy of the comparison and thus of the monitoring of the vehicle, or of the system, respectively.

The first sensor system may be adapted to provide the determined position and/or orientation of the vehicle to the processor for use in comparing the position and movement information to the motion information; wherein, optionally, the processor is adapted to use the determined position and/or orientation of the vehicle in comparing the position and movement information to the motion information.

The first sensor system may be arranged at a static position and/or at a static distance with respect to the system, for example with respect to the receiver and/or to the controller and/or to the processor.

The first sensor system may comprise a camera and/or a radar system and/or a lidar system and/or an ultrasound system and/or an inductance loop.

The receiver and/or the controller and/or the processor and the first sensor system, and - in embodiments wherein the system comprises the motorized object - optionally the motorized object, may be arranged in a vicinity of each other, such as at a distance of at most 50 m from each other.

The first sensor system may be adapted to monitor a second region, for example, to detect the vehicle when it is in the second region.

The receiver may be adapted to receive the electronic message from the second region.

The sender may be adapted to send the third machine-readable data to the second region, in particular wirelessly.

The second region may correspond to or may overlap or may coincide with the first region.

The processor may be adapted to determine the position and/or the orientation of the vehicle from the received electronic message.

The processor may be adapted to convert, using the position and/or orientation of the vehicle determined by the first sensor system and/or the position and/or the orientation of the vehicle determined by the processor, the position and movement information and the motion information into a common reference coordinate system. The processor may be adapted to compare the position and movement information to the movement in said common reference coordinate system.

Another aspect refers to a computer-implemented method for monitoring a vehicle, the vehicle comprising an electronic message transmission system. The method comprises controlling, by a controller, a movement of a motorized object; providing, by the controller, first machine-readable data comprising motion information associated with the movement; receiving, by a receiver, an electronic message transmitted wirelessly from the electronic message transmission system; identifying, by a processor, a position and movement information in the received electronic message; receiving, by the processor, the first machine-readable data; comparing, by the processor, the position and movement information to the motion information; and providing, by the processor, second machine-readable data. The second machine-readable data are associated with a result of comparing the position and movement information to the motion information.

The method may be a method for testing an electronic sensor system of the vehicle.

The method may comprise requesting, using a sender, the vehicle to send the electronic message.

The method may comprise sending, using the sender and before the electronic message is received, machine-readable instructions to the vehicle with the electronic message transmission system.

The method may comprise instructing, for example using the machine-readable instructions and/or before receiving the electronic message, the vehicle to autonomously or semi-autonomously adopt a position or follow a route defined by the system, for example defined relative to (a) position(s) of the receiver and/or of the motorized object and/or of the sender and/or defined according to a first region and/or according to a second region.

The method may comprise sending, for example after comparing the position and movement information to the motion information, third machine-readable data, wherein the third machine-readable data are associated with the result of comparing the position and movement information to the motion information.

The method may comprise receiving the third machine-readable data at the vehicle. In respective embodiments, the method may further comprise adjusting, in response to receiving the third machine-readable data, an electronic sensor system of the vehicle; and/or providing, by the vehicle and in response to receiving the third machine-readable data, an alert, such as a warning message and/or an alarm sound and/or a tactile warning; and/or adjusting, by the vehicle and in response to receiving the third machine-readable data, at least one parameter of the vehicle in response to receiving the third machine-readable data, in particular, wherein the at least one parameter is related to the electronic sensor system of the vehicle and/or to a power train of the vehicle and/or to an engine and/or to a transmission of the vehicle and/or to a lighting system of the vehicle; and/or autonomously driving the vehicle to a target position or stopping the vehicle in response to receiving the third machine-readable data.

Alternatively, or in addition, the method may further comprise sending, by the sender, the third machine-readable data to a remote server; receiving the third machine-readable data at the remote server, and, optionally, in response to receiving the third machine-readable data at the remote server, displaying at least part of the third machine-readable data and/or providing a warning message and/or sounding an alarm.

The method may further comprise converting, by the processor, and using a position and/or an orientation of the vehicle determined by a first sensor system and/or using a position and/or an orientation of the vehicle determined by the processor from the received electronic message, the position and movement information and the motion information into a common reference coordinate system.

The method may comprise comparing, by the processor, the position and movement information to the motion information in said common reference coordinate system.

Another aspect relates to the use of the system according to any of the embodiments described above for testing an electronic sensor system of the vehicle.

Another aspect relates to the use of the system according to any of the embodiments described above for determining a speed of the vehicle from the position and movement information. In respective embodiments, the system may be adapted to provide fourth machine-readable data associated with the speed of the vehicle, for example, the sender may be adapted to send the fourth machine-readable data, for example to the vehicle and/or to the remote server.

Another aspect relates to the use of the system according to any of the embodiments described above for traffic counting. In respective embodiments, the system may be adapted to provide fifth machine-readable data associated with the traffic count, for example, the sender may be adapted to send the fifth machine-readable data, for example to the vehicle and/or to the remote server.

Another aspect relates to a computer program comprising instructions which, when executed by a computer, cause the computer to carry out the method according to any of the embodiments described above.

### BRIEF DESCRIPTION OF THE FIGURES

The techniques of the present disclosure and the advantages associated therewith will be best apparent from a description of exemplary embodiments in accordance with the accompanying drawings, in which:
Fig. 1 gives a schematic illustration of a system according to an embodiment;
Fig. 2a, Fig. 2b give schematic illustrations of motorized objects according to two different embodiments;
Fig. 3 - Fig. 6 give schematic illustrations of systems according to different embodiments; and
Fig. 7 gives a schematic illustration of a method according to an embodiment.

### DETAILED DESCRIPTION OF EMBODIMENTS

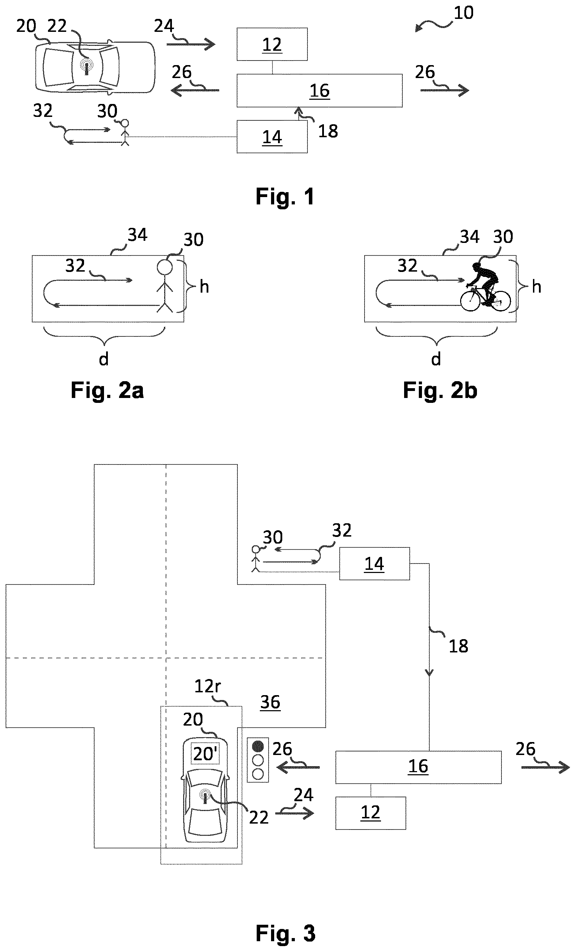

Fig. 1 gives a schematic illustration of a system 10 according to an embodiment.

The system 10 for monitoring a vehicle 20 comprises a receiver 12, a controller 14, and a processor 16.

According to the depicted example, the vehicle 20 is a car 20, but the system is as well suitable for use with another vehicle 20, such as a truck, a bus, or a motorbike, for as long as the vehicle 20 is equipped with an electronic message transmission system 22.

In the depicted embodiment, the controller 14 is a computer component adapted to provide a control signal via a wired or an (at least partially) wired connection.

An electric motor (not shown) is directly or indirectly (e.g., via a rail or a conveyor belt) mechanically coupled to an object 30, which is therefore referred to as a motorized object 30. According to some embodiments, the electric motor is mechanically connected to the motorized object 30 such that the motor moves both the motorized object 30 and itself when the electric motor is actuated, e.g., by driving wheels of the motorized object 30. According to other embodiments the electric motor remains at a fixed position, and moves the motorized object 30, e.g. by pulling it or by moving it on/in a rail or a conveyor belt.

The electric motor is equipped with an electronic reception means (not shown) for receiving the control signal from the controller 14. According to the depicted embodiment, the electronic reception means is a Universal Serial Bus (USB) receiver, but alternative electronic reception means are known from the prior art and can be used. In response to the reception of the control signal at the electronic reception means, the electric motor is actuated, causing a movement of the motorized object 30 as described above.

According to some embodiments, the electric motor and the electronic reception means are comprised in a motion controller. Respective motion controllers are known in the prior art and will not be described here in detail.

The control signal from the controller 14 contains electronic commands with motion information characterizing the movement that the motorized object 30 is to perform. Depending on the specific embodiments, the movement information contains a position that the motorized object 30 shall move to, a velocity at which the motorized object 30 shall move, an acceleration at which the motorized object 30 shall move, and/or a trajectory that the motorized object 30 shall follow. Upon reception of the control signal, the electric motor moves the motorized object 30 according to the motion information.

In other words, the motorized object 30 moves as defined by the control signal, or by the controller 14, respectively. In addition to sending the control signal to the motorized object 30, the controller 14 also sends machine-readable data (= first machine-readable data) 18 to the processor 16, containing full information about the movement 32 as defined in the control signal, or by the controller 14, respectively.

In particular, the first machine-readable data 18 contain some or all of the motion information described above regarding the movement that the motorized object 30 is to perform.

The processor 16 receives the first machine-readable data 18 and hence the motion information.

According to the depicted embodiment, the three-dimensional shape and the outer surface of the motorized object 30 are designed to resemble a pedestrian. In alternative embodiments, they may be designed to resemble another object, such as a bicyclist.

The vehicle 20 is equipped with an electronic sensor system 20', which is an environment sensor system 20' adapted to sense an environment outside of the vehicle 20.

In the depicted embodiment, the electronic sensor system 20' comprises five cameras and a radar system. According to alternative embodiments, fewer or additional sensors may be present, such as a lidar system or an ultrasound system.

In the depicted embodiment, the vehicle 20 senses, using its electronic sensor system 20', the movement 32 of the motorized object 30.

In the depicted embodiment, the electronic sensor system 20' applies an information fusion, such as a sensor fusion or a data fusion, to combine the data from the sensors of the electronic sensor system 20' and to derive information about the position and the movement 32 of the motorized object 30 (i.e., as sensed by the vehicle 20). Using the electronic message transmission system 22, the vehicle 20 transmits an electronic message 24.

The electronic message 24 contains position and movement information; more specifically, position and movement information associated with the movement 32 of the motorized object 30 as sensed by the vehicle 20, or by its electronic sensor system 20', respectively. This position and movement information is derived from the combined data from the information fusion as described above. Depending on the specific embodiment, the position and movement information contains the position, velocity, acceleration of the motorized object 30 as sensed by the vehicle 20. Optionally, the electronic message 24 comprises information about the type, object class, size or dimensions of the motorized object 30 as sensed by the vehicle 20.

In the depicted embodiment, the electronic message 24 is transmitted wirelessly using a car2x communication, for example using a Wireless Local Area Network (WLAN), a Wide Area Network (WAN), or a cellular communication network such as WLANbd (IEEE 802.11bd), 5G NR-V2X, WLANp, 5G, 4G, 3G, LTE+, LTE, or UMTS. The receiver 12 is a receiver 12 for a respective communication. The electronic message transmission system 22 is suitable for transmitting a respective electronic message 24. Hence, the receiver 12 is adapted to receive the electronic message 24 transmitted wirelessly from the electronic message transmission system 22 of the vehicle 20.

The receiver 12 receives the electronic message 24. The receiver 12 is coupled to the processor 16 by a data line, such as a bus, and communicates at least part of the electronic message 24 to the processor 16 via the data line. Alternatively, the receiver 12 performs a processing of the electronic message 24 and submits the result of the processing to the processor 16 via the data line.

The processor 16 receives, via the data line, data from the receiver 12, i.e., the at least part of the electronic message 24 or at least part of the result of said processing performed on the electronic message 24 by the receiver 12.

Since the data from the receiver 12 are based on the electronic message 24, they reflect the position and movement information associated with the movement 32 as sensed by the vehicle 20, which had been contained in the received electronic message 24. The processor 16 identifies this position and movement information in the data from the receiver 12.

Consequently, at the processor 16, the motion information as defined by the controller 14 is available (i.e., from the first machine-readable data 18) as well as the position and movement information associated with the movement 32 as sensed by the vehicle 20 (as identified in the data from the receiver 12).

Typically, the motion information as defined by the controller 14 and contained in the first machine-readable data 18 resembles the actual, physical movement 32 of the motorized object 30 closely and to a high accuracy. For this reason, it is also referred to as Ground Truth in the context of this disclosure.

In comparison, the position and movement information associated with the movement 32 as sensed by the vehicle 20 typically has a significantly lower accuracy, reflecting the accuracy of the electronic sensor system 20' of the vehicle 20, i.e., of its sensors and its software, for example for the information fusion. Any malfunctioning of the electronic sensor system 20' leads to a degradation of this accuracy, and to an enlarged deviation of the position and movement information associated with the movement 32 as sensed by the vehicle 20 from the actual, physical movement 32 of the motorized object 30.

The processor 16 compares the position and movement information associated with the movement 32 as sensed by the vehicle 20 to the motion information from the controller 14, i.e., to the Ground Truth, to determine said deviation, or to determine the accuracy of the electronic sensor system 20' of the vehicle 20, respectively. The processor 16 generates second machine-readable data 26 associated with the result of the performed comparison. For example, the second machine-readable data 26 comprise a measure of the deviation or of the determined accuracy of the electronic sensor system 20' of the vehicle 20, for example in the form of a standardized or normalized score.

Notably, both the position and movement information associated with the movement 32 as sensed by the vehicle 20 and the first machine-readable data 18, or the motion information from the controller 14, respectively, do not only contain information about the position of the motorized object 30, but also information about its speed and preferably also about its acceleration. The comparison performed by the processor 16 makes use of this rich set of data and does not only compare the position according to the position and movement information to the one of the movement 32 as defined by the controller 14, but also compares the speed according to the position and movement information to the one of the movement 32 as defined by the controller 14. Preferably, the processor 16 also compares the acceleration according to the position and movement information to the one of the movement 32 as defined by the controller 14.

Therefore, the comparison, or the second machine-readable data 26, respectively, give a much more accurate measure of the performance of the electronic sensor system 20' of the vehicle 20 than would be possible in the absence of the controller 14, or if a static reference object was used, respectively. In other words, the system according to the present disclosure can detect a malfunctioning of the electronic sensor system 20' of the vehicle 20 more reliably because of the presence of the controller 14 for controlling the movement of the motorized object 30.

Subsequently, the processor 16 provides the second machine-readable data 26 for further processing. In the depicted example, the second machine-readable data 26 are provided to the car 20, such that the car 20 can take responsive action, in particular when a malfunctioning of the electronic sensor system 20' of the vehicle 20 is detected. In the depicted example, the second machine-readable data 26 are further provided to a remote server 50 of a third party (not shown), such that the third party may take responsive action and, for example, initiate a repair or a software update of the electronic sensor system 20' of the vehicle 20. These are merely examples, other exemplary uses of the second machine-readable data 26 are possible, and some of them will be described below.

As described above, the monitoring of the vehicle 20 refers to testing the electronic sensor system 20' of the vehicle 20. According to some embodiments, the electronic sensor system 20' does not only comprise the sensors as such, but also the hardware (computer system) and the software (computer program) for object detection and/or information fusion such as sensor fusion. In other words, the electronic sensor system 20' according to some embodiments implements a vehicle perception system, which is to be tested by the system 10.

According to some embodiments, the monitoring of the vehicle 20 that the system 10 is designed for is limited to this purpose.

According to alternative embodiments, the system 10 implements additional functionality. In particular, the system 10 can also be used for traffic counting or for determining the speed of the vehicle 20.

For determining the speed of the vehicle 20, an information associated with the speed of the vehicle 20 is identified in the electronic message 24 by the system 10, e.g., as described above for the identification of the position and movement information. Instead of or together with the second machine-readable data 26, the system 10 provides fourth machine-readable data associated with the speed of the vehicle 20. The fourth machine-readable data may further comprise an indicator as to whether the speed of the vehicle exceeds a predefined threshold speed. In addition, an identifier of the vehicle 20 may be extracted from the electronic message 24. The identifier is a unique identifier, i.e., unique to an individual vehicle 20. The fourth machine-readable data may further comprise information associated with the identifier.

For traffic counting, the identifier of the vehicle 20 is extracted from the electronic message 24. Each time the system 10 detects a new identifier, a counting variable is incremented by one. Instead of or together with the second machine-readable data 26, the system 10 provides fifth machine-readable data associated with the traffic count, i.e., with the counting variable.

Hence the system 10 may replace a speed camera, which usually comes at a cost of about 65,000 - 250,000 €. The system 10 can be established at a much (i.e., typically about 10 times) lower cost, while providing additional functionality.

Notably, independent of whether the system 10 is specifically designed and used for testing the electronic sensor system 20' of the vehicle 20 or if it implements additional functionality, the system is well suited to monitor several vehicles 20 synchronously, thus improving the cost-efficiency of the system further.

In the context of this disclosure, the receiver 12, the controller 14, and the processor 16 are also collectively referred to as a road side unit or RSU. According to other embodiments described in detail below, wherein the system 10 comprises a sender 40 and/or a sensor system 54, the sender 40 (if present) and/or the sensor system 54 (if present) are/is also comprised in the RSU. Even though the receiver 12, the controller 14, and the processor 16, as well as the optional sender 40 (if present) and/or the optional sensor system 54 (if present) may be provided in a single, common, monolithic housing for protection from external influences, usage of the term RSU does not mean that this is necessarily the case. In some embodiments, the receiver 12, the controller 14, and the processor 16 as well as the optional sender 40 and/or the optional sensor system 54 are provided individually. This has the advantage that, if one or more component(s) of the system 10, for example, a receiver 12 and/or a processor 16, are/is already available at the site of installation, they/it may be used or modified to establish the system 10, and only the remaining missing components need to be newly acquired and installed at the site of installation. This reduces the cost of the system 10.

Notably, the processor 16 and the receiver 12 are not necessarily separate physical entities or exactly two physical entities; they may rather be combined into a single physical unit according to some embodiments. According to other embodiments, they may be distributed, e.g. making use of cloud computing. Any of those implementations is possible, for as long as the implementation provides the functionality specified in the context of the processor 16 and the receiver 12.

Fig. 2a and Fig. 2b depict motorized objects 30 according to two different embodiments.

According to various embodiments, the motorized object 30 is comprised in the system 10. This allows to provide a motorized object with a three-dimensional shape and a surface (e.g., color, material) optimized for exciting the electronic sensor system 20' of the vehicle 20, and thus to improve the reliability and accuracy of monitoring the vehicle 20.

The motorized object 30 of Fig. 2a has a three-dimensional shape and a surface resembling a pedestrian. Its height is in the range from 1.3 m to 2 m.

A pedestrian is defined in the software of the vehicle 20 with autonomous driving functionality as a vulnerable object. For this reason, the motorized object 30 resembling a pedestrian is given a high priority in the information fusion of the electronic sensor system 20' of the vehicle 20, and the respective motorized object 30 is sensed reliably by the vehicle 20. The shape of the pedestrian thus improves the reliability of the monitoring of the vehicle 20.

The motorized object 30 moves in/along a rail (not shown) along a circular or linear trajectory 32, or performs a circular or linear movement 32, respectively. A circular movement 32 is particularly beneficial, as it allows the system 10 to probe the accuracy of the electronic sensor system 20' of the vehicle 20 both along the longitudinal and the transverse direction of the vehicle 20. A linear movement 32 is beneficial in situations where a limited space is available for the motorized object 30.

Typically, the speed of the motorized object 30 changes during its movement 32, such that the comparison by the processor 16 described above considers the comparison of a (non-zero) acceleration between the position and movement information and the movement 32 as defined by the controller 14. This improves the accuracy of the monitoring of the vehicle 20. For example, the motorized object 30 moving in a linear rail moves quickly along the forward direction, and slowly along the backward direction, or the motorized object 30 moving in a circular rail moves quickly for half a round, and slowly during the subsequent half of said round.

The system 10 further comprises a housing 34. The housing 34 has a sufficient size to enclose the motorized object 30 as it performs the movement 32. In embodiments, wherein the motorized object 30 moves in/along a rail, the housing 34 has a sufficient size to enclose the rail. When the system 10 is installed, the housing 34 encloses the motorized object 30 as it moves along the trajectory 32.

The housing 34 prevents any passerby from entering the region of the movement 32 and being hit by the motorized object 30. It thus improves the safety of the system 10. Moreover, the housing 34 protects the motorized object 30 from external influences such as weather conditions, vandalism or bird strikes.

The motorized object 30 of Fig. 2b is similar to the one of Fig. 2a. However, the motorized object 30 has a three-dimensional shape and a surface resembling a bicyclist. Like a pedestrian, a bicyclist is defined in the software of the vehicle 20 with autonomous driving functionality as a vulnerable object. The motorized object 30 of Fig. 2b hence has the advantages described above in the context of Fig. 2a.

Moreover, part of the surface of the motorized object 30 is metallized to improve the reflectance for electromagnetic radiation (radar radiation, infrared and/or visible light).

According to alternative embodiments (not shown), the motorized object 30 resembles a car, a truck, a motorbike, or a bus.

Hence, in various embodiments, the motorized object 30 resembles a specific type of object such as a car, a truck, a pedestrian, or a bicycle, with predefined dimensions, or with a predefined size, respectively. The respective information about the (physical) motorized object 30 is provided to the processor. If, in such an embodiment, the electronic message 24 contains information about the type/object class of the motorized object 30 as sensed by the vehicle 20 or about the size or the dimensions of the motorized object 30 as sensed by the vehicle 20, in the course of the comparison described above, the processor 16 preferably also compares the respective information from the electronic message 24 to the corresponding information about the (physical) motorized object 30. This improves the accuracy of the comparison and hence of the system 10.

Fig. 3 shows a system 10 installed at a street 36 around a first region 12r.

In the depicted embodiment, the first region 12r corresponds to a section 12r of the street 36.

The receiver 12 is adapted, i.e., arranged, such that it can receive signals (e.g., the electronic message 24) from the first region 12r.

The motorized object 30 is arranged with a line of sight to the first region 12r.

The system 10 is arranged such that it can provide the second machine-readable data 26 to the first region 12r, for example using a wireless local area network such as WLANbd (IEEE 802.11bd), WLANp, or WLAN.

Alternative embodiments use a cellular network to provide the second machine-readable data 26 to the first region 12r.

A respective arrangement ensures reliable monitoring of the vehicle 20 by the system 10.

The arrangement further has the advantage that the vehicle 20 can be monitored during its regular operation (i.e., without any interruption to its regular operation), for example during a waiting time at a sign or at a traffic light occurring independently of the system 10.

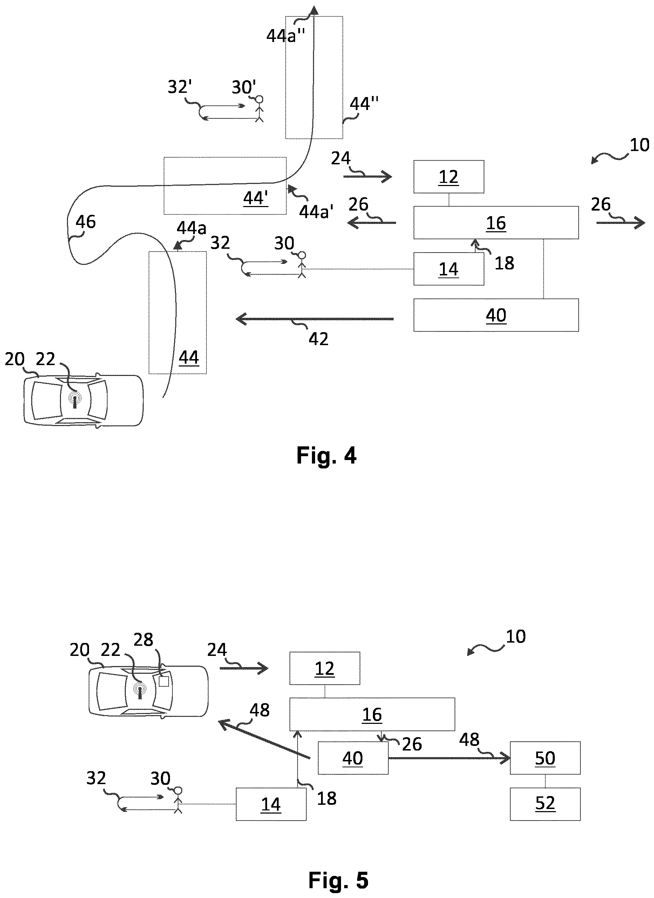

Fig. 4 shows the system 10 according to another embodiment.

The system 10 of Fig. 4 is similar to the system of Fig. 1 or of Fig. 3. In addition, the system 10 of Fig. 4 comprises a sender 40.

The sender 40 of the embodiment depicted in Fig. 4 uses a wireless car2x communication, as described above in the context of Fig. 1. However, according to alternative embodiments, the sender 40 alternatively or in addition provides a communication to a remote server 50 (not shown), as will be laid out in detail, for example, in the context of Fig. 5 below. In such embodiments, the sender 40 may use a wireless or a wired communication, or a combination of the two.

The sender 40 sends machine-readable instructions 42 to the vehicle 20. The vehicle 20 receives the machine-readable instructions 42 via its wireless communication system 22, which also comprises the electronic message transmission system 22 described above.

The machine-readable instructions 42 inform the vehicle 20 that a monitoring of the vehicle, such as a sensor test, is about to be performed.

Hence, they allow the vehicle 20 to take action. The vehicle 20 may decide whether to send the electronic message 24, automatically or in response to an input by a driver. The machine-readable instructions 42 hence ensure that the vehicle 20 transmits the electronic message 24 and that the monitoring can be performed.

The machine-readable instructions 42 recommend a position 44, 44', 44" to the vehicle 20, or to its driver, respectively. According to some embodiments, the vehicle 20 may adapt a position 44, 44', 44" in response to the machine-readable instructions 42, for example by autonomously driving to the position 44, 44', 44". Alternatively, a message is displayed to the driver, indicating the position 44, 44', 44", such that the driver can navigate the vehicle 20 to the position 44, 44', 44".

According to some embodiments, upon reception of the machine-readable instructions 42 by the vehicle 20, the vehicle 20 outputs a message to a driver asking the driver whether the position 44, 44', 44" shall be assumed. In case of a respective input by the driver, the vehicle 20 drives autonomously to the position 44, 44', 44".

In respective embodiments, the position 44, 44', 44" has been predefined such that the car 20 can reliably sense the motorized object 30 from the position 44, 44', 44", and the machine-readable data 42 contain information about the position 44, 44', 44" to be adapted. Preferably, the machine-readable data 42 contain information about an orientation 44a, 44a', 44a" the vehicle 20 is recommended to assume at the respective position 44, 44', 44". In any of the described embodiments, the position 44, 44', 44" is preferably accompanied by an orientation 44a, 44a', 44a" associated with the position 44, 44', 44".

In some embodiments, the machine-readable data 42 contain information about a series of positions 44, 44', 44", defined such that from the respective positions 44, 44', 44" the vehicle 20 can sense the motorized object 30 from various perspectives, and/or that from the respective positions 44, 44', 44" the vehicle 20 can sense a series of motorized objects 30, 30' moving along respective trajectories 32, 32' (not shown). Such embodiments improve the accuracy of monitoring the vehicle 20, or of the sensor test, respectively.

As an alternative to providing a series of positions 44, 44', 44" and related orientations 44a, 44a', 44a", the machine-readable instructions 42 comprise information about a recommended route 46. In response to reception of the machine-readable instructions 42, the car 20 follows the route 46 autonomously or indicates the route 46 to the driver as described above in the context of adopting the position 44, 44', 44".

The system 10 according to the embodiment of Fig. 4 is particularly advantageous for use at a periodic vehicle inspection site. Using the respective system 10, the sensor test can be performed with an improved accuracy and reliability, and under standardized conditions, which are desirable for defining criteria for passing or failing the inspection.

Fig. 5 shows the system 10 according to another embodiment.

The system 10 of Fig. 5 is similar to the system of Fig. 1 or of Fig. 3, however, the system 10 of Fig. 5 comprises a sender 40. According to some embodiments (not shown), the system 10 of Fig. 5 comprises the features described above in the context of Fig. 4. In other words, the sender 40 of Fig. 5 according to some embodiments also provides the functionality of the sender 40 of Fig. 4.

The sender 40 of the embodiment according to Fig. 5 is adapted to receive the second machine-readable data 26, i.e., the result of the comparison, from the processor 16. The sender 40 sends third machine-readable data 48. The third machine-readable data 48 are associated with the result of the comparison described above in the context of Fig. 1.

In the depicted embodiment, the sender 40 sends the third machine-readable data 48 to the vehicle 20 using a wireless car2x communication, as described above in the context of Fig. 1, and it also sends the third machine-readable data 48 to a remote server 50, using a wireless and/or a wired communication. In alternative embodiments, only a part of the third machine-readable data 48 sent to the vehicle 20 is also sent to the remote server 50, or, vice versa, only a part of the third machine-readable data 48 sent to the remote server 50 is also sent to the vehicle 20. In yet other embodiments (not depicted), the third machine-readable data 48 are only sent to the car 20 or to the remote server 50 by the sender 40.

In response to the reception of the third machine-readable data 48, the vehicle 20 performs one or several of the following responsive actions: adjusting the electronic sensor system 20' of the vehicle 20; providing an alert 28, such as a warning message and/or an alarm sound and/or a tactile warning; adjusting at least one parameter of the vehicle 20, wherein the at least one parameter is preferably related to the electronic sensor system 20' of the vehicle 20 and/or to a power train of the vehicle 20 and/or to an engine and/or to a transmission of the vehicle 20 and/or to a lighting system of the vehicle 20; autonomously stopping or driving to a target position; initiating an update of a software of the vehicle 20.

In response to the reception of the third machine-readable data 48, the remote server 50 performs one or several of the following responsive actions: providing an alert 52; displaying at least part of the third machine-readable data 48, for example on a screen 52; providing a warning message 52; sounding an alarm 52.

According to some embodiments, the remote server 50 uses the third machine-readable data 48 for traffic or accident analysis.

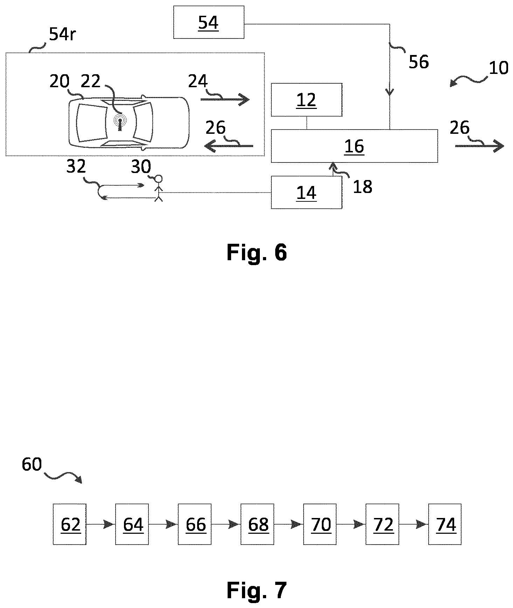

Fig. 6 shows the system 10 according to another embodiment.

The system 10 of Fig. 6 is similar to the systems of Fig. 1, Fig. 3, Fig. 4, and Fig. 5, and may comprise the features and functionalities described in the context of one or all of the respective embodiments.

The controller 14 provides the first machine-readable data 18 (or the motion information, respectively) reflecting the movement 32 with respect to a coordinate system of the controller 14 and/or of the motorized object 30. This coordinate system is preferentially aligned with a static environment of the system 10, such as a map or the street 36 described in the context of Fig. 3. Alternatively, the processor 16 performs the alignment of the coordinate system of the controller 14 and/or of the motorized object 30 with the coordinate system of the static environment of the system 10. Since the position and orientation of the controller 14 and/or of the motorized object 30 with respect to the static environment are/is typically known from the installation of the system 10, the alignment of the movement 32 as reflected in the first machine-readable data 18 (or in the motion information, respectively) with the coordinate system of the static environment can be performed using known techniques.

Depending on the details of vehicle 20, the electronic message 24 in some cases contains the movement information associated with the movement 32 as sensed by the vehicle 20 with respect to an external, map frame, i.e., with respect to the coordinate system associated with the static environment (e.g., map, street 36 as described above for the trajectory 32 of the first machine-readable data 18). If the system 10 receives such an electronic message 24, the position and movement information associated with the movement 32 as sensed by the vehicle 20 and the movement 32 as defined by the controller 14 are already in a common reference system. No further conversion into a common reference coordinate system is needed in this case.

However, a vehicle 20 in some cases transmits an electronic message 24 containing the movement information associated with the movement 32 as sensed by the vehicle 20 in the coordinate system of the vehicle 20, for example with respect to a longitudinal direction and a transverse direction of the vehicle 20. If this is the case, the processor 16 according to the embodiment of Fig. 6 converts the respective movement information associated with the movement 32 as sensed by the vehicle 20 and the movement 32 as defined by the controller 14 into a common reference coordinate system.

The conversion typically comprises a translation and a rotation of at least one of the coordinate systems (i.e., of the controller 14 and/or the motorized object 30 on the one hand, and of the vehicle 20 on the other hand) with respect to the other. The amount and the direction of the translation is determined by the position of the vehicle 20 relative to the static environment, or to the system 10, respectively. The amount of the rotation depends on the orientation of the vehicle 20 relative to the static environment, or to the system 10, respectively.

In some embodiments, information about the position of the vehicle 20 relative to the static environment, or to the system 10, respectively, and about the orientation of the vehicle 20 relative to the static environment, or to the system 10, respectively, is contained in the electronic message 24 and is thus received by the receiver 12 with the electronic message 24. The system 10, for example the receiver 12 or the processor 16, determines the position and the orientation of the vehicle 20 from the received electronic message 24. The translation and the rotation of at least one of the coordinate systems is then performed by the processor 16 according to the position and the orientation of the vehicle 20 as determined from the received electronic message 24, thus converting the position and movement information associated with the movement 32 as sensed by the vehicle 20 and the movement 32 as defined by the controller 14 into the common reference coordinate system. The comparison described in the context of Fig. 1 is then performed in the common reference coordinate system.

Optionally, and as is depicted in Fig. 6, the system 10 comprises a sensor system 54 (= first sensor system 54) adapted to determine the position and the orientation of the vehicle 20. The first sensor system 54 is similar to the sensor system 20' of the vehicle 20 described above. According to some embodiments, the first sensor system 54 makes use of data received from road equipment such as an inductance loop comprised in the street 36 (not shown).

The system 10 comprising the first sensor system 54 determines the position and the orientation of the vehicle 20 with a higher accuracy as compared to a system 10 only using the information about the position and the orientation of the vehicle 20 from the electronic message 24. According to some embodiments, the precision of the determined position and orientation of the vehicle 20 is further improved by combining the position and the orientation obtained from the first sensor system 54 and from the electronic message 24.

In the depicted embodiment, the first sensor system 54 monitors a second region 54r. The first sensor system 54 is preferentially arranged such that the second region 54r coincides or overlaps with the first region 12r described above and/or with at least one of the positions 44, 44', 44" described above and/or with at least a section of the route 46 described above. This arrangement ensures a reliable measurement of the position and the orientation of the vehicle 20 during the monitoring, or during the sensor test, respectively.

Fig. 7 illustrates a computer-implemented method 60 for monitoring a vehicle 20, the vehicle 20 comprising an electronic message transmission system 22.

The method 60 comprises controlling 62, by a controller 14, a movement of a motorized object 30.

The method 60 comprises providing 64, by the controller 14, first machine-readable data 18 comprising a motion information associated with the movement 32.

The method 60 comprises receiving 66, by a receiver 12, an electronic message 24 transmitted wirelessly from the electronic message transmission system 22.

The method 60 comprises identifying 68, by a processor 16, a position and movement information in the received electronic message 24.

The method 60 comprises receiving 70, by the processor 16, the first machine-readable data 18.

The method 60 comprises comparing 72, by the processor 16, the position and movement information to the motion information.

The method 60 comprises providing 74, by the processor 16, second machine-readable data 26. The second machine-readable data 26 are associated with a result of comparing the position and movement information to the motion information.

According to another embodiment a computer program is provided. The computer program comprises instructions 42 which, when executed by a computer, cause the computer to carry out the method 60 described above.

### LIST OF REFERENCE SIGNS

- 10: system
- 20: vehicle
- 20': electronic sensor system of the vehicle
- 22: electronic message transmission system of the vehicle
- 24: electronic message
- 12: receiver
- 14: controller
- 30: motorized object
- 32: movement, trajectory
- 34: housing
- 16: processor
- 18: first machine-readable data
- 26: second machine-readable data
- h: height of the motorized object
- d: distance spanned by the movement of the motorized object
- 36: street
- 40: sender
- 42: machine-readable instructions
- 44, 44', 44": positions
- 44a: target orientation
- 46: route
- 48: third machine-readable data
- 28: alarm
- 50: remote server
- 52: alert, screen, warning message and/or alarm
- 12r: first region
- 54r: second region
- 54: first sensor system
- 56: position and/or orientation of the vehicle
- 60: method

## Claims

1. A system (10) for monitoring a vehicle (20), the vehicle (20) comprising an electronic message transmission system (22), wherein the system (10) comprises:
a receiver (12) adapted to receive an electronic message (24) transmitted wirelessly from the electronic message transmission system (22);
a controller (14) adapted to control a movement (32) of a motorized object (30); and
a processor (16) operationally coupled to the receiver (12) and adapted to:
identify a position and movement information in the received electronic message (24),
receive from the controller (14) first machine-readable data (18) comprising a motion information associated with the movement (32), and
compare the position and movement information to the motion information, and to provide second machine-readable data (26), wherein the second machine-readable data (26) are associated with a result of comparing the position and movement information to the motion information.

2. The system (10) of claim 1,
wherein the system (10) is a system (10) for testing an electronic sensor system (20') of the vehicle (20), and/or
wherein the receiver (12), the controller (14), and the processor (16) form a monolithic unit or are comprised in a common housing, and/or
wherein the receiver (12) and/or the controller (14) and/or the processor (16) are arranged in a vicinity of each other, such as at a distance of at most 50 m from each other.

3. The system (10) of claim 1 or 2, which further comprises the motorized object (30), and wherein, optionally:
the motorized object (30) has a height (h) of at least 0.5 m; and/or
the motorized object (30) has a height of at most 3 m; and/or
the movement of the motorized object (30) spans a distance (d) of at least 0.5 m; and/or
the motorized object (30) is adapted to be identified by the vehicle (20) or by an electronic sensor system (20') of the vehicle (20) as a pedestrian or as a bicycle or as a two-wheeler; and/or
the motorized object (30) is adapted to reflect a type of object from a list comprising a car, a truck, a pedestrian, and a bicycle, wherein the processor is adapted to identify an object type information in the received electronic message (24), and to compare the object type information to the type of the object, and wherein the second machine-readable data (26) are further associated with a result of comparing the object type information to the type of object; and/or
at least part of a surface of the motorized object (30) is formed by a metal; and/or
the motorized object (30) and/or the receiver (12) is arranged in a vicinity, for example at a distance of at most 10 m, of a street (36) adapted to support the vehicle; and/or
the system (10) further comprises a housing (34) adapted to enclose the motorized object (30) when the motorized object (30) performs the movement or that encloses the motorized object (30) when the motorized object (30) performs the movement, in particular, wherein the housing (34) is transparent, for example for visible light and/or for infrared light and/or for radar radiation and/or for electromagnetic radiation in a frequency range from 20 to 200 GHz or from 20 to 100 GHz; and/or
wherein the receiver (12) and/or the controller (14) and/or the processor (16) and the motorized object (30) are arranged in a vicinity of each other, such as at a distance of at most 50 m from each other.

4. The system (10) according to any of the preceding claims, which further comprises a sender (40),
wherein, optionally, the sender (40) is adapted to
request the vehicle (20) with the electronic message transmission system (22) to send the electronic message (24); and/or
send, for example before the electronic message (24) is received, machine-readable instructions (42) to the vehicle (20) with the electronic message transmission system (22), wherein the machine-readable instructions (42) are adapted to instruct the vehicle (20) to autonomously or semi-autonomously adopt a position (44, 44', 44") or follow a route (46) defined by the system (10), for example defined relative to (a) position(s) (44, 44', 44") of the receiver (12) and/or of the motorized object (30) and/or of the sender (40) and/or defined according to a first region (12r) and/or according to a second region (54r).

5. The system (10) of claim 4, wherein the sender (40) is adapted to receive the second machine-readable data (26) and to send third machine-readable data (48), wherein the third machine-readable data (48) are associated with the result of comparing the position and movement information to the motion information;
wherein optionally:
the sender (40) is adapted to send the third machine-readable data (48) wirelessly for reception by the vehicle (20) with the electronic message transmission system (22), such as for adjusting an electronic sensor system (20') of the vehicle (20);
wherein, optionally, the vehicle (20) is comprised in the system (10) and/or the vehicle (20) is adapted to receive the third machine-readable data (48), for example using a wireless communication system of the vehicle (20);
wherein, optionally, the vehicle (20) is adapted to provide an alert (28), such as a warning message and/or an alarm sound and/or a tactile warning, in response to receiving the third machine-readable data (48); and/or
wherein, optionally, the vehicle (20) is adapted to adjust at least one parameter of the vehicle (20) in response to receiving the third machine-readable data (48), in particular, wherein the at least one parameter is related to the electronic sensor system (20') of the vehicle (20) and/or to a power train of the vehicle (20) and/or to an engine and/or to a transmission of the vehicle (20) and/or to a lighting system of the vehicle (20); and/or
wherein, optionally, the vehicle (20) is adapted to autonomously drive to a target position or to stop in response to receiving the third machine-readable data (48); and/or
the sender (40) is adapted to send the third machine-readable data (48) to a remote server (50) adapted to receive the third machine-readable data (48), such as a remote server (50) at a distance of at least 10 m or at least 100 m from the receiver (12); in particular, wherein the remote server (50) is comprised in the system (10), and wherein the remote server (50) is adapted to, in response to receiving the third machine-readable data (48), provide an alert (52), and/or to display at least part of the third machine-readable data (48) on a screen (52) and/or to provide a warning message (52) and/or to sound an alarm (52).

6. The system (10) of claim 3, wherein the receiver (12) is adapted to receive the electronic message (24) from a first region (12r), and wherein
the receiver (12) and the motorized object (30) are arranged with a line of sight to the first region (12r); and/or
the receiver (12) is adapted to receive the electronic message (24) from the vehicle (20), for example when the vehicle (20) is located in the first region (12r); and/or
the system (10) comprises the sender (40) of claim 4, wherein the sender (40) is adapted to send the third machine-readable data (48) to the first region (12r), in particular wirelessly.

7. The system (10) according to any of the preceding claims, which further comprises a first sensor system (54) adapted to determine a position and/or an orientation of the vehicle (20); wherein, optionally:
the first sensor system (54) is adapted to provide the determined position and/or orientation (56) of the vehicle (20) to the processor (16) for use in comparing the position and movement information to the motion information; wherein, optionally, the processor (16) is adapted to use the determined position and/or orientation (56) of the vehicle (20) in comparing the position and movement information to the motion information; and/or
the first sensor system (54) is arranged at a static position and/or at a static distance with respect to the system (10), for example with respect to the receiver (12) and/or to the controller (14) and/or to the processor (16); and/or
the first sensor system (54) comprises a camera and/or a radar system and/or a lidar system and/or an ultrasound system and/or an inductance loop; and/or
the receiver (12) and/or the controller (14) and/or the processor (16) and the first sensor system (54), and optionally the motorized object (30), are arranged in a vicinity of each other, such as at a distance of at most 50 m from each other, and/or
the first sensor system (54) is adapted to monitor a second region (54r), for example, to detect the vehicle (20) when it is in the second region (54r), and:
wherein the receiver (12) is adapted to receive the electronic message (24) from the second region (54r); and/or
the sender (40) is adapted to send the third machine-readable data (48) to the second region (54r), in particular wirelessly; and/or
the second region (54r) corresponds to or overlaps or coincides with the first region (12r).

8. The system (10) according to any of any of the preceding claims, wherein the processor (16) is adapted to determine the position and/or the orientation of the vehicle (20) from the received electronic message (24).

9. The system (10) of claim 7 or 8, wherein the processor (16) is adapted to
convert, using the position and/or orientation (56) of the vehicle (20) determined by the first sensor system (54) and/or the position and/or the orientation of the vehicle (20) determined by the processor (16), the position and movement information and the motion information into a common reference coordinate system, and
compare the position and movement information to the movement in said common reference coordinate system.

10. A computer-implemented method (60) for monitoring a vehicle (20), the vehicle (20) comprising an electronic message transmission system (22), wherein the method (60) comprises:
controlling (62), by a controller (14), a movement of a motorized object (30);
providing (64), by the controller (14), first machine-readable data (18) comprising a motion information associated with the movement (32);
receiving (66), by a receiver (12), an electronic message (24) transmitted wirelessly from the electronic message transmission system (22);
identifying (68), by a processor (16), a position and movement information in the received electronic message (24);
receiving (70), by the processor (16), the first machine-readable data (18);
comparing (72), by the processor (16), the position and movement information to the motion information; and
providing (74), by the processor (16), second machine-readable data (26), wherein the second machine-readable data (26) are associated with a result of comparing the position and movement information to the motion information.

11. The method (60) of claim 10,
wherein the method (60) is a method (60) for testing an electronic sensor system (20') of the vehicle (20); and/or
wherein the method (60) further comprises:
requesting, using a sender (40), the vehicle (20) to send the electronic message (24); and/or
sending, using the sender (40), before the electronic message (24) is received, machine-readable instructions (42) to the vehicle (20) with the electronic message transmission system (22); and/or
instructing, for example using the machine-readable instructions (42) and/or before receiving the electronic message (24), the vehicle (20) to autonomously or semi-autonomously adopt a position or follow a route defined by the system (10), for example defined relative to (a) position(s) of the receiver (12) and/or of the motorized object (30) and/or of the sender (40) and/or defined according to a first region (12r) and/or according to a second region (54r).

12. The method (60) of claim 10 or 11, which further comprises
sending, for example after comparing the position and movement information to the motion information, third machine-readable data (48), wherein the third machine-readable data (48) are associated with the result of comparing the position and movement information to the motion information;
and, according to a first alternative:
receiving the third machine-readable data (48) at the vehicle (20);
wherein the method (60) optionally further comprises:
adjusting, in response to receiving the third machine-readable data (48), an electronic sensor system (20') of the vehicle (20); and/or
providing, by the vehicle (20) and in response to receiving the third machine-readable data (48), an alert, such as a warning message and/or an alarm sound and/or a tactile warning; and/or
adjusting, by the vehicle (20) and in response to receiving the third machine-readable data (48), at least one parameter of the vehicle (20) in response to receiving the third machine-readable data (48), in particular, wherein the at least one parameter is related to the electronic sensor system (20') of the vehicle (20) and/or to a power train of the vehicle (20) and/or to an engine and/or to a transmission of the vehicle (20) and/or to a lighting system of the vehicle (20); and/or
autonomously driving the vehicle (20) to a target position or stopping the vehicle (20) in response to receiving the third machine-readable data (48); and/or
according to a second alternative:
sending, by the sender (40), the third machine-readable data (48) to a remote server (50);
receiving the third machine-readable data (48) at the remote server (50),
and, optionally, in response to receiving the third machine-readable data (48) at the remote server (50), displaying at least part of the third machine-readable data (48) and/or providing a warning message and/or sounding an alarm.

13. The method (60) of any of claims 10 to 12, which further comprises
converting, by the processor (16), and using a position and/or an orientation of the vehicle (20) determined by a first sensor system (54) and/or using a position and/or an orientation of the vehicle (20) determined by the processor (16) from the received electronic message (24), the position and movement information and the motion information into a common reference coordinate system, and
comparing, by the processor (16), the position and movement information to the movement in said common reference coordinate system.

14. Use of the system (10) according to any of claims 1 to 9 for testing an electronic sensor system (20') of the vehicle (20).

15. A computer program comprising instructions (42) which, when executed by a computer, cause the computer to carry out the method (60) according to any of claims 10 to 13.
